# EUROPÄISCHE PATENTSCHRIFT

(11) **EP 3 551 776 B1**
(45) Veröffentlichungstag und Bekanntmachung des Hinweises auf die Patenterteilung: **06.11.2024**
(21) Anmeldenummer: 17768744.9
(22) Anmeldetag: 12.09.2017
(51) Int. Cl.: C22C 38/04, C22C 38/02, C22C 38/06, B32B 15/18, C21D 6/00, C23C 2/02, C23C 2/06, C21D 8/04, C23C 2/26, C23C 2/40, B32B 15/01, C21D 9/48, B21B 37/24, B21B 37/26, C21D 8/02, C21D 9/46

(54) **VERFAHREN ZUR HERSTELLUNG EINES WARM- ODER KALTBANDES UND/ODER EINES FLEXIBEL GEWALZTEN STAHLFLACHPRODUKTS AUS EINEM HOCHFESTEN MANGANHALTIGEN STAHL UND STAHLFLACHPRODUKT HIERNACH**
METHOD FOR PRODUCING A HOT OR COLD STRIP AND/OR A FLEXIBLY ROLLED FLAT STEEL PRODUCT MADE OF A HIGH-STRENGTH MANGANESE STEEL AND FLAT STEEL PRODUCT PRODUCED BY SAID METHOD
PROCÉDÉ DE FABRICATION D'UNE BANDE LAMINÉE À CHAUD OU À FROID ET/OU D'UN PRODUIT PLAT EN ACIER LAMINÉ DE MANIÈRE FLEXIBLE CONSTITUÉ PAR UN ACIER CONTENANT DU MANGANÈSE, HAUTEMENT SOLIDE ET PRODUIT PLAT EN ACIER AINSI OBTENU

(30) Priorität: 16.09.2016 DE 102016117502
(43) Veröffentlichungstag der Anmeldung: 16.10.2019
(73) Patentinhaber: Salzgitter Flachstahl GmbH, 38239 Salzgitter (DE)
(72) Erfinder: PALZER, Peter, 38704 Liebenburg (DE); EVERTZ, Thomas, 31228 Peine (DE); OTTO, Manuel, 38162 Cremlingen (DE); KÖHLER, Kai, 31171 Nordstemmen (DE)
(74) Vertreter: Moser Götze & Partner Patentanwälte mbB
(86) Internationale Anmeldenummer: PCT/EP2017/072889
(87) Internationale Veröffentlichungsnummer: WO 2018/050637

(56) Entgegenhaltungen:
- EP-A1- 2 767 602
- EP-A1- 2 937 436
- EP-A1- 3 214 193
- EP-A2- 2 383 353
- WO-A1-2009/095264
- WO-A1-2014/180456
- WO-A1-2016/067624

## Beschreibung

Die Erfindung betrifft ein Verfahren zur Herstellung eines flexibel gewalzten Stahlflachprodukts aus einem hochfesten manganhaltigen Stahl mit TRIP- und/oder TWIP-Effekt sowie mit erhöhtem Widerstand gegen wasserstoffinduzierte verzögerte Rissbildung (delayed fracture) und gegen Wasserstoffversprödung (hydrogen embrittlement). Flexibel gewalzte Stahlflachprodukte können zum Beispiel als Stahlbänder oder Stahlbleche vorliegen, wobei als Halbzeug für das flexible Walzen Warm- oder Kaltband eingesetzt werden kann. Der Gehalt an Mangan liegt bei diesen Stählen zwischen > 5 und < 10 Gewichts-%. Auch betrifft die Erfindung ein Verfahren zur Herstellung eines Warm- oder Kaltbandes aus einem hochfesten manganhaltigen Stahl sowie ein nach dem Verfahren flexibel gewalztes Stahlflachprodukt.

Im Zusammenhang mit der vorliegenden Erfindung wird unter flexiblem Walzen ein Verfahren zur Herstellung von Stahlflachprodukten verstanden, bei dem über einen einstellbaren Walzspalt ein Stahlflachprodukt mit unterschiedlichen Dicken in nahezu beliebiger Abfolge in Walzrichtung hergestellt wird. Dickenunterschiede von bis zu 50% können innerhalb eines flexibel gewalzten Stahlflachprodukts erreicht werden; Vorteil ist der homogene Übergang zwischen zwei konstanten Dicken. Das über flexibles Walzen hergestellte Stahlflachprodukt wird bevorzugt verwendet, um im Sinne eines vorgefertigten Halbzeugs anschließend zum Beispiel durch Tiefziehen oder Rollprofilieren zu einem gewünschten Bauteil umgeformt zu werden. Die umgeformten Bauteile werden vielfach in der Automobilindustrie zum Beispiel für die Herstellung von Fahrzeugkarosserien eingesetzt. Durch das flexible Walzen wird in vorteilhafter Weise erreicht, dass das flexibel gewalzte Stahlflachprodukt Dickenverläufe aufweist, die an das später hieraus umzuformende Bauteil belastungsangepasst sind, wodurch entsprechend Material und Gewicht eingespart wird und optional mehre Bauteile ohne weitere Fügeverfahren ineinander integriert werden können, was zu geringeren Fertigungskosten führt. Insbesondere kommen Bauteile in Frage, die über ihre Länge eine unterschiedliche Beanspruchung erfahren.

Aus der europäischen Patentanmeldung EP 2 383 353 A2 ist ein höherfester manganhaltiger Stahl, ein Stahlflachprodukt aus diesem Stahl und ein Verfahren zur Herstellung dieses Stahlflachprodukts bekannt. Der Stahl besteht aus den Elementen (Gehalte in Gewichts-% und bezogen auf die Stahlschmelze): C: bis 0,5; Mn: 4 bis 12,0; Si: bis zu 1,0; AI: bis zu 3,0; Cr: 0,1 bis 4,0; Cu: bis zu 4,0; Ni: bis zu 2,0; N: bis zu 0,05; P: bis zu 0,05; S: bis zu 0,01; sowie Rest Eisen und unvermeidbare Verunreinigungen. Optional sind ein oder mehrere Elemente aus der Gruppe "V, Nb, Ti" vorgesehen, wobei die Summe der Gehalte dieser Elemente höchstens gleich 0,5 ist. Dieser Stahl soll sich dadurch auszeichnen, dass dieser kostengünstiger herzustellen ist als hochmanganhaltige Stähle und gleichzeitig hohe Bruchdehnungswerte und damit einhergehend eine deutlich verbesserte Umformbarkeit besitzt. Ein Verfahren zur Herstellung eines Stahlflachprodukts aus dem vorbeschriebenen höherfesten manganhaltigen Stahl, umfasst die folgenden Arbeitsschritte: - Erschmelzen der vorbeschriebenen Stahlschmelze, - Erzeugen eines Ausgangsprodukts für ein anschließendes Warmwalzen, indem die Stahlschmelze zu einem Strang, von dem mindestens eine Bramme oder Dünnbramme als Ausgangsprodukt für das Warmwalzen abgeteilt wird, oder zu einem gegossenen Band vergossen wird, das als Ausgangsprodukt dem Warmwalzen zugeführt wird, - Wärmebehandeln des Ausgangsprodukts, um das Ausgangsprodukt auf eine Warmwalzstarttemperatur von 1150 bis 1000 °C zu bringen, - Warmwalzen des Ausgangsprodukts zu einem Warmband mit einer Dicke von höchstens 2,5 mm, wobei das Warmwalzen bei einer 1050 bis 800 °C betragenden Warmwalzendtemperatur beendet wird, - Haspeln des Warmbands zu einem Coil bei einer Haspeltemperatur von ≤ 700 °C. Optional kann das Warmband bei 250 bis 950°C geglüht, anschließend kaltgewalzt und wieder bei 450 bis 950°C geglüht werden. Die Möglichkeit eines flexiblen Walzens wird nicht erwähnt.

Des Weiteren ist aus der deutschen Patentschrift DE 10 2012 110 972 B3 ein Verfahren zum Herstellen eines Erzeugnisses aus flexibel gewalztem Bandmaterial bekannt. Das flexible Walzen wird dabei als Kaltwalzprozess durchgeführt. Mittels flexiblen Walzens wird aus einem Bandmaterial mit weitestgehend konstanter Dicke ein flexibel gewalztes Bandmaterial mit über der Länge des Bandmaterials variabler Dicke erzeugt. Eine Legierungszusammensetzung für das flexibel gewalzte Bandmaterial wird nicht erwähnt.

Auch die Patentanmeldung US 2015/0147589 A1 beschreibt das flexible Walzen von Stahlbändern zur Erzeugung von Bandmaterial mit mindestens zwei unterschiedlichen Dicken entlang des Stahlbandes. Das flexible Walzen wird als flexibles Kaltwalzen durchgeführt. Eine auszugsweise Legierungszusammensetzung für das flexibel gewalzte Bandmaterial enthält (Gehalte in Gewichts-%): C: ≤0,1; Mn: 0,5 bis 7; Al: ≤0,1; P: ≤0,03; S: ≤0,005; N: ≤0,008; sowie Rest Eisen und prozessbedingte Verunreinigungen.

In der europäischen Patentschrift EP 1 238 727 B1 wird ein Verfahren zur Herstellung von metallischen Bändern mit Abschnitten unterschiedlicher Materialeigenschaften offenbart. Die metallischen Bänder werden in einer Zweirollen-Gießmaschine hergestellt und streifenförmige Abschnitte unterschiedlicher Materialeigenschaften durch unterschiedliche Abkühlgeschwindigkeiten erreicht. Für die Durchführung dieses Verfahrens lassen sich niedrig legierte oder mikrolegierte Stahllegierungen verwenden, die typischerweise und auszugsweise folgende Zusammensetzung enthalten (Gehalte in Gewichts-%): C: 0,01 bis 0,8; Mn: 0,3 bis 5; Al: ≤0,1 sowie Rest Eisen und unvermeidbaren Verunreinigungen. Ein nach diesem Verfahren erzeugtes Band kann als Vormaterial für flexibles Walzen eingesetzt werden.

Ferner sind in der deutschen Offenlegungsschrift DE 10 2012 013 113 A1 bereits sogenannte TRIP-Stähle beschrieben, die ein überwiegend ferritisches Grundgefüge mit eingelagertem Restaustenit aufweisen, der während einer Umformung zu Martensit umwandeln kann (TRIP-Effekt). Wegen ihrer starken Kaltverfestigung erreichen TRIP-Stähle hohe Werte der Gleichmaßdehnung und Zugfestigkeit. Zum Einsatz kommen TRIP-Stähle u. a. in Struktur-, Fahrwerks- und crashrelevanten Bauteilen von Fahrzeugen, als Blechplatinen, Tailored Blanks (geschweißte Platinen) sowie als flexibel kaltgewalzte Bänder, sogenannte Tailored rolled blanks (TRB's). Die flexibel kaltgewalzten Bänder ermöglichen eine signifikante Gewichtsreduktion durch eine belastungsangepasste Blechdicke über die Bauteillänge. Der Stahl weist einen Mangangehalt von 1 bis 2,25 Gewichts-% auf.

Auch ist bereits aus der internationalen Offenlegungsschrift WO 2009/095264A1 ein Verfahren zum Herstellen eines TWIP-Stahlstreifens bekannt, wobei geschmolzener Stahl mit einer Zusammensetzung umfassend 0,05-0,78 % C, 11 bis 23 % Mn, höchstens 5 % Al, höchstens 5 % Cr, höchstens 2,5 % Ni, höchstens 5 % Si, höchstens 0,5 % V, wobei der Rest Eisen und unvermeidbare Verunreinigungen sind, zu einer Bramme mit einer Dicke von mindestens 30 mm und höchstens 120 mm stranggegossen wird. Anschließend wird Bramme zu einem Stahlstreifen einer gewünschten Enddicke warmgewalzt. In einer Ausführungsform wird der warmgewalzte Stahlstreifen anschließend flexibel kaltgewalzt. Die Temperatur des Stahlstreifens vor dem flexiblen Walzen wird dabei auf maximal 400 °C, vorzugsweise 200 °C, begrenzt. Diese Temperaturwerte werden ebenfalls während des Walzens eingehalten. Im Anschluss an das flexible Walzen kann das Band mit Zink beschichtet werden.

Ferner ist aus der internationalen Offenlegungsschrift WO 2014/180456 A1 bereits ein Verfahren zur Herstellung von Bauteilen aus einem im Ausgangszustand metastabilen austenitischen Leichtbaustahl durch Walzen eines Bleches, aufweisend einen temperaturabhängigen TRIP- und/oder TWIP-Effekt während der Umformung, bekannt. Zur Erzielung einer hohen Zähigkeit des Bauteils wird das Walzen bei einer den TRIP-/TWIP-Effekt vermeidenden Temperatur oberhalb Raumtemperatur bei 40 bis 160°C und zur Erzielung einer hohen Bauteilfestigkeit das Walzen bei einer den TRIP-/TWIP-Effekt verstärkenden Temperatur unterhalb der Raumtemperatur bei -65 bis 0°C vorgenommen.

Die internationale Offenlegungsschrift WO 2016/067624 A1 beziehungsweise die zugehörige europäische Offenlegungsschrift EP 3 214 193 A1 beschreibt ein Verfahren zur Herstellung eines hochfesten warmgewalzten Stahlflachprodukts mit einer guten Umformbarkeit, einer hohen Streckgrenze sowie einer hohen Zugfestigkeit. Die Zusammensetzung des Stahlflachproduktes umfasst (in Gewichts-%): C: 0,03 bis 0,25; Mn: 4,2 bis 6; P: 0,001 bis 0,1; S: 0,0001 bis 0,02; N: 0,0005 bis 0,01; Si: 0,01 bis 3; Ti: 0,005 bis 0,2; sowie eins oder mehrere von (in Gewichts-%): AI: 0,01 bis 2; Cr: 0,005 bis 1; Nb: 0,005 bis 2; V: 0,005 bis 0,5; Sn: 0,002 bis 0,2; Cu: 0,005 bis 1; Ta: 0,001 bis 0,01; B: 0,0003 bis 0,005; Ni: 0,005 bis 1; Mo: 0,005 bis 1; Sb: 0,002 bis 0,2; Ca: 0,0005 bis 0,005; Mg: 0,0005 bis 0,005; REM: 0,0005 bis 0,005. Eine zugehörige Stahlbramme wird auf eine Temperatur von 1100°C bis 1300°C erhitzt und danach warmgewalzt, wobei die Walzenendtemperatur zwischen 750°C und 1000°C liegt. Danach wird das Warmband bei einer Temperatur von 300°C bis 750°C aufgehaspelt und gebeizt. Vor einem nachfolgenden Kaltwalzen wird das Stahlband bei einer Temperatur von Ac1+20°C bis Ac1+120°C für 600 bis 21.600 s geglüht. Dem Kaltwalzen folgt ein weiteres Glühen bei einer Temperatur von Ac1 bis Ac1+100°C für 20 bis 900 s. Anschließend wird das Stahlblech entweder verzinkt oder verzinkt gefolgt von einer Legierungsbehandlung bei 450°C bis 600°C, feuerverzinkt oder elektrolytisch verzinkt.

Problematisch bei der Herstellung von flexibel kaltgewalzten Stahlflachprodukten aus einem hochfesten manganhaltigen Stahl ist die starke Neigung zur Kaltverfestigung während des flexiblen Walzens, welche die Umformkräfte stark erhöht und dadurch den maximalen Umformgrad begrenzt. Zudem weist der bekannte manganhaltige Stahl einen eingeschränkten, maximalen Walz-Umformgrad auf Grund der schneller einsetzenden Martensitbildung bei Umformung bei Raumtemperatur auf. Weiterhin ist das Restumformvermögen des so hergestellten Stahlflachprodukts stark reduziert, so dass vor einer umformtechnischen Weiterverarbeitung fallweise eine kostenaufwändige Glühung zur Wiederherstellung der Umformbarkeit erforderlich wird.

Hiervon ausgehend liegt der vorliegenden Erfindung die Aufgabe zu Grunde, ein Verfahren zur Herstellung eines flexibel gewalzten Stahlflachprodukts aus einem hochfesten manganhaltigen Stahl mit TRIP- und/oder TWIP-Effekt, insbesondere zur Herstellung eines flexibel gewalzten Stahlflachprodukts, anzugeben, welches beim flexiblen Walzen einen hohen maximalen Umformgrad realisiert und bezogen auf den Stahl eine gute Kombination von Festigkeits- und Umformeigenschaften sowie ein hohes Restumformvermögen des flexibel gewalzten Stahlflachproduktes bietet. Auch soll das so hergestellte Stahlflachprodukt einen hohen Widerstand gegen wasserstoffinduzierte verzögerte Rissbildung, Wasserstoffversprödung sowie gegen Flüssigmetallversprödung beim Schweißen aufweisen.

Diese Aufgabe wird durch ein Verfahren zur Herstellung eines flexibel gewalzten Stahlflachprodukts aus einem hochfesten manganhaltigen TRIP- und/oder TWIP-Stahl mit den Merkmalen des Anspruchs 1 realisiert. Vorteilhafte Ausgestaltungen der Erfindung sind in den Unteransprüchen angegeben. Ein erfindungsgemäßes Stahlflachprodukt wird mit den Merkmalen des Anspruchs 10 angegeben. Eine Verwendung des so hergestellten Stahlflachproduktes wird mit den Merkmalen des Anspruchs 12 angegeben.

Erfindungsgemäß liefert ein Verfahren zur Herstellung eines flexibel gewalzten Stahlflachprodukts mit einer abschnittsweise geforderten Enddicke aus einem hochfesten manganhaltigen Stahl mit einer Zugfestigkeit Rm von mehr als 1000 MPa bis 2000 MPa und einer Bruchdehnung A50 von mehr als 3 % bis 45 % in den am stärksten umgeformten Bereichen des Stahlflachproduktes aufweist, umfassend die Schritte:
- Erschmelzen einer Stahlschmelze mit einer Legierungszusammensetzung enthaltend (in Gewichts-%): C: 0,05 bis 0,35; Mn: > 5 bis < 10; AI: 0,05 bis 5; P: < 0,1; S: < 0,1; N: < 0,1; Rest Eisen einschließlich unvermeidbarer stahlbegleitender Elemente, mit optionaler Zulegierung von einem oder mehreren der folgenden Elemente (in Gewichts-%): Si: bis 6; Cr: bis 6; Nb: bis 1; V: bis 1,5; Ti: bis 1,5; Mo: bis 3; Sn: bis 0,5; Cu: bis 3; W: bis 5; Co: bis 8; Zr: bis 0,5; Ta: bis 0,5; Te: bis 0,5: B: bis 0,15, über die Prozessroute Hochofen-Stahlwerk oder Elektrolichtbogenofen-Stahlwerk mit optionaler Vakuumbehandlung der Schmelze;
- Vergießen der Stahlschmelze zu einem Vorband mittels eines endabmessungsnahen horizontalen oder vertikalen Bandgießverfahrens oder Vergießen der Stahlschmelze zu einer Bramme oder Dünnbramme mittels eines horizontalen oder vertikalen Brammen- oder Dünnbrammengießverfahrens,
- Erwärmen des Vorbandes oder der Bramme oder Dünnbramme auf eine Temperatur von 1050 bis 1250°C oder Inlinewalzen aus der Gießhitze heraus,
- Warmwalzen auf eine gleichmäßige Enddicke von 20 bis 0,8 mm bei einer Walzendtemperatur von 1050 bis 800°C,
- Aufhaspeln des Warmbandes bei einer Haspeltemperatur von mehr als 100 bis 800°C,
- Beizen des Warmbandes
- Glühen des Warmbandes bei einer Temperatur von 500 bis 840°C für eine Zeit von 1 min bis 24 h in einer Durchlauf- oder Haubenglühe,
- optionales Kaltwalzen des Warmbandes auf eine gleichmäßige Enddicke bei Raumtemperatur oder erhöhter Temperatur in einem oder mehreren Walzstichen,
- optionales Glühen des kaltgewalzten Warmbandes bei einer Temperatur von 500 bis 840 °C für 1 min bis 24 h in einer Durchlauf- oder Haubenglühe
- Flexibles Walzen des Warm- oder Kaltbandes in einem Walzschritt oder in mehreren Walzschritten auf die abschnittsweise geforderten Enddicken mit einer Temperatur des Warm- oder Kaltbandes von 60 °C bis unterhalb Ac3, vorzugsweise von 60 °C bis 450 °C, vor dem ersten Walzschritt, wobei dieses Merkmal dahingehend verstanden wird, dass vor dem ersten Walzschritt die gewünschte Temperatur bereits erreicht ist und nicht erst durch das Walzen an sich entsteht,
- optionales elektrolytisches Verzinken oder Feuerverzinken des Warm- oder Kaltbandes oder Aufbringen einer anderweitigen metallischen, organischen oder anorganischen Beschichtung vor oder nach dem flexiblen Walzen,
ein Stahlflachprodukt, welches beim flexiblen Walzen einen hohen maximalen Umformgrad realisiert und bezogen auf den Stahl eine gute Kombination von Festigkeits- und Umformeigenschaften sowie ein hohes Restumformvermögen des flexibel gewalzten Stahlflachproduktes bietet, sowie einen erhöhten Widerstand gegenüber verzögerter Rissbildung, Wasserstoffversprödung und Flüssigmetallversprödung, welches zusätzlich bei mechanischer Beanspruchung einen TRIP- und/oder TWIP-Effekt aufweist.

Besonders bevorzugt erfolgt die Vorwärmung des Warm- oder Kaltbandes vor dem ersten Walzschritt auf eine Temperatur von 60 °C bis unterhalb Ac3, vorzugsweise von 60 °C bis 450 °C.

Auch ist vorteilhafter Weise vorgesehen, dass das Warm- oder Kaltband mit Ausnahme des ersten Walzschrittes in den folgenden Walzschritten bei gleichen oder unterschiedlichen Temperaturen des Warm- oder Kaltbandes von Raumtemperatur, die im Bereich zwischen 15 bis 25 °C liegt, bis unterhalb Ac3, vorteilhaft bei Raumtemperatur bis unterhalb 450 °C, flexibel gewalzt wird. In einer speziellen Verfahrensweise ist vorgesehen, dass das Warm- oder Kaltband in dem ersten Walzschritt und den folgenden Walzschritten bei gleichen Temperaturen des Warm- oder Kaltbandes von 60 °C bis unterhalb Ac3, vorteilhaft bei 60 °C bis unterhalb 450 °C, flexibel gewalzt wird.

Im Zusammenhang mit der vorliegenden Erfindung wird Raumtemperatur als im Bereich zwischen 15 bis 25 °C liegend definiert.

Angeschlossen an das Halbwarmwalzen mit Vorwärmung, können bei mehreren erforderlichen Walzschritten optional der letzte Walzschritt oder mehrere letzte Walzschritte bei Temperaturen, optional lokal begrenzt, von -100 bis 60 °C erfolgen und dabei gezielt metastabiler Austenit in Martensit umgewandelt werden. Hierdurch kann zielgerichtet die Festigkeit im fertig umgeformten Halbzeug oder Produkt erhöht werden.

Unter Verwendung des beschriebenen manganhaltigen Stahles wird mit dem erfindungsgemäßen Verfahren nun folgendes möglich:
- Erhöhung des maximalen Umformgrads von flexibel gewalztem Mittelmanganstahl durch Verringerung der Verfestigung während des flexiblen Walzens
- Gezielte Einstellung von Festigkeits- und Dehnungseigenschaften durch Variation der Umformtemperatur.

In einer vorteilhaften Weiterbildung der Erfindung ist vorgesehen, dass das Kaltwalzen bei einer Temperatur vor dem ersten Walzschritt von 60 °C bis unterhalb der Ac3-Temperatur, bevorzugt von 60 bis 450 °C, und eine Erwärmung oder Kühlung zwischen den Walzstichen auf 60 °C bis unterhalb der Ac3-Temperatur, bevorzugt auf 60 bis 450 °C, erfolgt. Das Kaltwalzen bei erhöhter Temperatur ist vorteilhaft, um die Walzkräfte zu reduzieren und die Bildung von Verformungszwillingen (TWIP-Effekt) zu begünstigen.

Weiterhin ist vorgesehen, dass das kaltgewalzte Band zur Wiederherstellung ausreichender Umformeigenschaften anschließend bei einer Temperatur von 500 bis 840 °C für 1 min bis 24 h in einer Durchlauf- oder Haubenglühe geglüht wird.

Im Zusammenhang mit dem vorstehenden erfindungsgemäßen Verfahren wird ein endabmessungsnah mit dem Zwei-Rollen Gießverfahren erzeugtes Vorband mit einer Dicke von kleiner gleich 3 mm, vorzugsweise 1 mm bis 3 mm, bereits als Warmband mit einer einheitlichen Dicke verstanden. Das so als Warmband mit einer einheitlichen Dicke produzierte Vorband weist, bedingt durch die eingebrachte Umformung der beiden gegenläufigen Walzen, keine ursprüngliche Gussstruktur auf. Ein Warmwalzen findet somit bereits inline während des Zwei-Rollen-Gießverfahrens statt, so dass ein separates Warmwalzen entfallen kann.

Das Glühen des Warmbandes findet mit einer Glühtemperatur von 500 bis 840 °C und einer Glühdauer von 1 Minute bis 24 Stunden statt. Höhere Temperaturen werden hierbei kürzeren Behandlungszeiten und umgekehrt zugeordnet. Die Glühung kann sowohl beispielsweise in einer Haubenglühe (längere Glühzeiten) als auch beispielsweise in einer Durchlaufglühe (kürzere Glühzeiten) erfolgen. Durch das Glühen können annähernd homogene mechanische Eigenschaften in den unterschiedlichen Dickenbereichen des flexibel gewalzten Stahlflachprodukts eingestellt werden, die in einem späteren Umformprozess eine gute Verarbeitbarkeit sicherstellen.

Das flexible Walzen des Warm- oder Kaltbandes erfolgt erfindungsgemäß nach anfänglicher Verformung im Bereich von 60 °C bis unterhalb Ac3, bevorzugt 60 °C bis 450 °C in einem oder mehreren Stichen bzw. Walzschritten, wodurch während des Walzvorgangs eine Umwandlung von metastabilem Austenit in Martensit (TRIP-Effekt) ganz oder teilweise unterdrückt wird und wobei sich im Austenit Verformungszwillinge (TWIP-Effekt) bilden können, die das Umformvermögen wieder deutlich steigern. Dieser Effekt bewirkt vorteilhaft eine Reduktion der Walzkräfte und erhöht das Gesamtumformvermögen.

Weiterhin weist das bei erhöhter Temperatur flexibel gewalzte Endprodukt bei gleichem Umformgrad mindestens die gleichen oder höhere Festigkeitseigenschaften (Streck-/Dehngrenze und/oder Zugfestigkeit) wie/als das bei Raumtemperatur flexibel gewalzte Endprodukt auf, wobei die Bruchdehnung im Vergleich zum flexiblen Walzen bei Raumtemperatur um mindestens 5% oder sogar um 10 % höher liegt. Analog ist es möglich, vergleichbare Kennwerte für die Bruchdehnung einzustellen, wobei der Kennwert für die Festigkeit (Streck-/Dehngrenze, und/oder Zugfestigkeit) im Vergleich 10 % oberhalb der Kennwerte vom flexiblen Walzen bei Raumtemperatur liegt.

Nach dem flexiblen Walzen bei erhöhter Temperatur können abschließend ein oder mehrere Walzschritte bei Temperaturen, die auch lokal begrenzt sein können, von - 100 bis 60 °C durchgeführt werden, wobei gezielt metastabiler Austenit in Martensit umgewandelt und die Festigkeit in dem betroffenen Bereich deutlich erhöht wird.

Das erfindungsgemäße Verfahren zum flexiblen Walzen dieses Werkstoffs bei erhöhten Temperaturen, führt insgesamt über eine Optimierung der Metallurgie, der Warmwalzbedingungen und der Temperatur-Zeit-Parameter an der Glühanlage zu einem Kaltband beziehungsweise Warmband, das sich besonders gut für ein anschließendes flexibles Walzen eignet. Insbesondere werden die Walzkräfte beim flexiblen Walzen verringert und der maximale Umformgrad dabei erhöht. Das flexibel gewalzte Stahlflachprodukt weist zudem ein erhöhtes Restumformvermögen auf, was eine ansonsten erforderliche Glühung, wie zum Beispiel eine

Rekristallisationsglühung des Materials nach dem flexiblen Walzen überflüssig macht.

Erfindungsgemäß können weiterhin durch lokale Erwärmung/Kühlung beim flexiblen Walzen lokal Festigkeiten und Restdehnungen angepasst werden, wobei durch gezielte Abkühlung vor allem höhere Festigkeiten und durch lokale Erwärmung höhere Restdehnungen erreicht werden.

Aufgrund der erhöhten Temperatur vor dem Walzen können gezielt Verformungszwillinge (TWIP-Effekt) eingebracht werden, welche bei Raumtemperatur weiter in Martensit umwandeln und dadurch das Energieaufnahmevermögen erhöhen und einen höheren Umformgrad zulassen. Derart erzeugte Stahlflachprodukte weisen einen erhöhten Widerstand gegenüber wasserstoffinduzierter Versprödung und verzögerter Rissbildung auf, da der TRIP-Effekt zumindest teilweise unterdrückt wird.

Vorzugsweise wird das flexibel gewalzte Stahlflachprodukt schmelztauch- oder elektrolytisch verzinkt oder metallisch, anorganisch oder organisch überzogen. Im Fall, dass bereits verzinkte Warm- oder Kaltbänder flexibel gewalzt werden sollen, wird die Erwärmtemperatur vor dem Walzen optional vorteilhaft auf 60 bis 450 °C begrenzt, um eine Verflüssigung von Zink weitestgehend zu verhindern. Zudem findet auch eine nur geringe thermische Belastung des Zinküberzugs beim Halbwarmumformen unter 450 °C statt, wodurch auch nach dem Umformprozess noch ein kathodischer Korrosionsschutz des Überzugs gewährleistet ist.

Auch ist eine gute Schweißbarkeit gegeben. Außerdem ist die Herstellung dieses erfindungsgemäßen Manganstahls mit mittlerem Mangangehalt (medium manganese steel) auf der Basis der Legierungselemente C und Mn sehr kostengünstig.

Bei dem erfindungsgemäßen Stahl handelt es sich um eine Legierung, die einen TRIP- und/oder TWIP-Effekt aufweist, welcher das Umformvermögen und die Zugfestigkeit verbessert. Des Weiteren wird das Bauteilversagen hierdurch im Fall von Überlastungen dadurch abgemildert, dass das Bauteil lokal verformt wird, wobei Spannungen abgebaut werden und dadurch ein plötzliches Versagen, beispielsweise durch Reißen des Bauteils vermindert wird.

Ein nach dem erfindungsgemäßen Verfahren hergestelltes und flexibel gewalztes Stahlflachprodukt weist eine Zugfestigkeit Rm von mehr als 1000 MPa und eine Bruchdehnung A50 von mehr als 3 % bis 45 % in den am stärksten umgeformten Bereichen des Stahlflachproduktes auf.

Hinsichtlich der Legierungszusammensetzung zur Erzielung der gewünschten Effekte haben sich folgende Elementgehalte als besonders vorteilhaft herausgestellt:
C: 0,05 bis 0,35
Mn: > 5 bis < 10
Al: > 0,5 bis 3
wahlweise in Kombination mit
Si: 0 - 6, vorzugsweise 0,05 - 3, insbesondere bevorzugt 0,1 - 1,5
Cr: 0 - 6, vorzugsweise 0,1 - 4, insbesondere bevorzugt > 0,5 - 2,5
Nb: 0 - 1, vorzugsweise 0,005 - 0,4, insbesondere bevorzugt 0,01 - 0,1
V: 0 - 1,5, vorzugsweise 0,005 - 0,6, insbesondere bevorzugt 0,01 - 0,3
Ti: 0 - 1,5, vorzugsweise 0,005 - 0,6, insbesondere bevorzugt 0,01 - 0,3
Mo: 0 - 3, vorzugsweise 0,005 - 1,5, insbesondere bevorzugt 0,01 - 0,6
Sn: 0 - 0,5, vorzugsweise < 0,2, insbesondere bevorzugt < 0,05
Cu: 0 - 3, vorzugsweise < 0,5, insbesondere bevorzugt < 0,1
W: 0 - 5, vorzugsweise 0,01 - 3, insbesondere bevorzugt 0,2 - 1,5
Co: 0 - 8, vorzugsweise 0,01 - 5, insbesondere bevorzugt 0,3 - 2
Zr: 0 - 0,5, vorzugsweise 0,005 - 0,3, insbesondere bevorzugt 0,01 - 0,2
Ta: 0 - 0,5, vorzugsweise 0,005 - 0,3, insbesondere bevorzugt 0,01 - 0,1
Te: 0 - 0,5, vorzugsweise 0,005 - 0,3, insbesondere bevorzugt 0,01 - 0,1
B: 0 - 0,15, vorzugsweise 0,001 - 0,08, insbesondere bevorzugt 0,002 - 0,01

Legierungselemente werden dem Stahl in der Regel zugegeben, um gezielt bestimmte Eigenschaften zu beeinflussen. Dabei kann ein Legierungselement in verschiedenen Stählen unterschiedliche Eigenschaften beeinflussen. Die Wirkung und Wechselwirkung hängt im Allgemeinen stark von der Menge, der Anwesenheit weiterer Legierungselemente und dem Lösungszustand im Werkstoff ab. Die Zusammenhänge sind vielseitig und komplex. Im Folgenden soll auf die Wirkung der Legierungselemente in dem erfindungsgemäßen Stahl näher eingegangen werden. Nachfolgend werden die positiven Effekte der erfindungsgemäß verwendeten Legierungselemente beschrieben.

Die Verwendung des Begriffs "bis" in der Definition der Gehaltsbereiche, wie beispielsweise 0,005 bis 0,6 Gewichts-%, bedeutet, dass die Eckwerte - im Beispiel 0,005 und 0,6 - mit eingeschlossen sind.

Kohlenstoff C: C wird benötigt zur Bildung von Karbiden, stabilisiert den Austenit und erhöht die Festigkeit. Höhere Gehalte an C verschlechtern die Schweißeigenschaften und führen in den erfindungsgemäßen Stählen zur Verschlechterung der Dehnungs- und Zähigkeitseigenschaften, weshalb ein maximaler Gehalt von 0,35 Gewichts-% festgelegt wird. Um die gewünschten Festigkeiten und Mindestbruchdehnungswerte in Kombination zu erreichen, ist eine Mindestzugabe von 0,05 Gewichts-% vorgesehen. Es sind Gehalte von 0,05 bis 0,35 Gewichts-% vorgesehen.

Mangan Mn: Mn stabilisiert den Austenit, erhöht die Festigkeit und die Zähigkeit und ermöglicht eine verformungsinduzierte Martensit- und/oder Zwillingsbildung in der erfindungsgemäßen Legierung. Gehalte von 5 Gewichts-% oder weniger sind nicht ausreichend zur Stabilisierung des Austenits und verschlechtern somit die Dehnungseigenschaften, während bei Gehalten von 10 Gewichts-% oder mehr Austenit zu stark stabilisiert wird und dadurch die Festigkeitseigenschaften, insbesondere die Streckgrenze, verringert werden. Für den erfindungsgemäßen Manganstahl mit mittleren Mangangehalten wird ein Bereich von mehr als 5 und weniger als 10 Gewichts-% festgelegt.

Phosphor P: P ist ein Spurenelement, stammt überwiegend aus dem Eisenerz und wird im Eisengitter als Substitutionsatom gelöst. Phosphor steigert durch Mischkristallverfestigung die Festigkeit und Härte und verbessert die Härtbarkeit. Es wird allerdings in der Regel angestrebt, den Phosphorgehalt soweit wie möglich abzusenken, da er unter anderem durch seine geringe Diffusionsgeschwindigkeit stark seigerungsanfällig ist und in hohem Maße die Zähigkeit vermindert. Durch die Anlagerung von Phosphor an den Korngrenzen können Risse entlang der Korngrenzen beim Warmwalzen auftreten. Zudem setzt Phosphor die Übergangstemperatur von zähem zu sprödem Verhalten um bis zu 300 °C herauf. Aus vorgenannten Gründen ist der Phosphorgehalt auf kleiner 0,1 Gewichts-%, bevorzugt auf kleiner 0,04 Gewichts-% begrenzt.

Schwefel S: S ist wie Phosphor als Spurenelement im Eisenerz aber insbesondere bei der Erzeugungsroute über den Hochofenprozess im Koks gebunden. Er ist im Stahl im Allgemeinen unerwünscht, da er zu starker Seigerung neigt und stark versprödend wirkt. Es wird daher versucht, möglichst geringe Mengen an Schwefel in der Schmelze zu erreichen (z. B. durch eine Tiefvakuumbehandlung). Aus vorgenannten Gründen ist der Schwefelgehalt auf kleiner 0,1 Gewichts-% bevorzugt kleiner 0,02 Gewichts-% begrenzt.

Stickstoff N: N ist ebenfalls ein Begleitelement aus der Stahlherstellung. Er verbessert im gelösten Zustand bei höher manganhaltigen Stählen von größer gleich 4 Gewichts-% Mn die Festigkeits- und Zähigkeitseigenschaften. Niedriger Mn-legierte Stähle von unter 4 Gewichts-% Mn neigen in Gegenwart von freiem Stickstoff zu einem starken Alterungseffekt. Der Stickstoff diffundiert schon bei geringen Temperaturen an Versetzungen und blockiert diese. Er bewirkt damit einen Festigkeitsanstieg verbunden mit einer Abnahme der Zähigkeitseigenschaften. Ein Abbinden des Stickstoffes in Form von Nitriden ist durch Zulegieren beispielsweise von Aluminium, Vanadium, Niob oder Titan möglich. Aus vorgenannten Gründen ist der Stickstoffgehalt auf kleiner 0,1 Gewichts-% bevorzugt kleiner 0,05 Gewichts-% begrenzt.

Aluminium Al: Al wird in Gehalten von 0,05 bis 5 Gewichts-% zulegiert. Al wird zur Desoxidation von Stählen genutzt. Des Weiteren verbessert eine Zugabe von Al vorteilhaft die Festigkeits- und Dehnungseigenschaften und beeinflusst das Umwandlungsverhalten der erfindungsgemäßen Legierung positiv. Des Weiteren konnte eine Verbesserung der Kaltwalzbarkeit durch Zulegieren von Al beobachtet werden. Al-Gehalte von bis zu 10 Gewichts-% reduzieren das spezifische Gewicht des Stahls deutlich und tragen damit zur Verringerung des Kraftstoffverbrauchs in Kraftfahrzeugen bei. Allerdings verschlechtern höhere Al-Gehalte das Gießverhalten im Strangguss deutlich.

Hierdurch entsteht ein höherer Aufwand beim Vergießen. Gehalte an Al von mehr als 5 Gewichts-% verschlechtern zudem die Dehnungseigenschaften. Daher wird ein maximaler Gehalt von 5 Gewichts-% festgelegt. Vorzugsweise wird eine Legierungszugabe im Bereich von größer als 0,05 Gewichts-% bis 5 Gewichts-% festgelegt. Besonders bevorzugt ist der minimale Al-Gehalt > 0,5 Gewichts-% und der maximale Gehalt 3 Gewichts-%.

Silizium Si: Si behindert die Kohlenstoffdiffusion, verringert die spezifische Dichte und erhöht die Festigkeit und die Dehnungs- sowie Zähigkeitseigenschaften. Des Weiteren konnte eine Verbesserung der Kaltwalzbarkeit durch Zulegieren von Si beobachtet werden. Gehalte von mehr als 6 Gewichts-% führen in den erfindungsgemäßen Legierungen zu einer Versprödung des Werkstoffs und beeinflussen die Warm- und Kaltwalzbarkeit sowie die Beschichtbarkeit beispielsweise durch Verzinken negativ. Daher wird ein maximaler Gehalt von 6 Gewichts-% festgelegt. Bevorzugt wird eine Zulegierung im Bereich von 0,05 bis 3 Gewichts-%, besonders bevorzugt im Bereich von 0,1 bis 1,5 Gewichts-%.

Chrom Cr: Cr verbessert die Festigkeit und verringert die Korrosionsrate, verzögert die Ferrit- und Perlitbildung und bildet Karbide. Der maximale Gehalt wird optional mit kleiner 6 Gewichts-% festgelegt, da höhere Gehalte eine Verschlechterung der Dehnungseigenschaften zur Folge haben. Bevorzugt wird ein Cr- Gehalt von 0,1 bis 4 Gewichts-%, besonders bevorzugt mehr als 0,5 bis 2,5 Gewichts-%.

Mikrolegierungselemente werden in der Regel nur in sehr geringen Mengen zugegeben (< 0,1 Gewichts-% pro Element). Sie wirken im Gegensatz zu den Legierungselementen hauptsächlich durch Ausscheidungsbildung können aber auch in gelöstem Zustand die Eigenschaften beeinflussen. Bereits geringe Mengenzugaben der Mikrolegierungselemente beeinflussen die Verarbeitungs- und Endeigenschaften erheblich. Insbesondere bei der Warmumformung beeinflussen Mikrolegierungselemente das Rekristallisationsverhalten vorteilhaft und bewirken eine Kornfeinung.

Typische Mikrolegierungselemente sind Vanadium, Niob und Titan. Diese Elemente können im Eisengitter gelöst werden und bilden mit Kohlenstoff und Stickstoff Carbide, Nitride oder Carbonitride.

Vanadium V und Niob Nb: Diese wirken insbesondere durch die Bildung von Karbiden kornfeinend, wodurch gleichzeitig die Festigkeit, Zähigkeit und Dehnungseigenschaften verbessert werden. Gehalte von über 1 Gewichts-% bei Nb und 1,5 Gewichts-% bei V bringen keine weiteren Vorteile. Gehalte von 0,005 bis 0,4 Gewichts-% für Nb, bevorzugt 0,01 bis 0,1 Gewichts-% und 0,005 bis 0,6 Gewichts-% für V, bevorzugt 0,01 bis 0,3 Gewichts-% können optional zugegeben werden.

Titan Ti: Ti wirkt als Karbidbildner kornfeinend, wodurch gleichzeitig die Festigkeit, Zähigkeit und Dehnungseigenschaften verbessert werden und vermindert die interkristalline Korrosion. Gehalte an Ti von über 1,5 Gewichts-% verschlechtern die Dehnungs- und Umformeigenschaften in den erfindungsgemäßen Legierungen, weshalb optional ein Maximalgehalt von 1,5 Gewichts-% festgelegt wird. Mindestgehalte von 0,005 bis 0,6 Gewichts-%, bevorzugt 0,01 bis 0,3 Gewichts-% können optional zugegeben werden.

Molybdän Mo: Mo wirkt als starker Karbidbildner und erhöht die Festigkeit und erhöht den Widerstand gegen verzögerte Rissbildung und Wasserstoffversprödung. Gehalte an Mo von über 3 Gewichts-% verschlechtern die Dehnungseigenschaften, weshalb optional ein Maximalgehalt von 3 Gewichts-% und ein Minimalgehalt von 0,005 bis 1,5 Gewichts-%, bevorzugt 0,01 bis 0, 6 Gewichts-% festgelegt wird.

Zinn Sn: Sn steigert die Festigkeit, reichert sich jedoch ähnlich Kupfer bei höheren Temperaturen unter der Zunderschicht und an den Korngrenzen an. Es führt durch Eindringen in die Korngrenzen zur Bildung niedrig schmelzender Phasen und damit verbunden zu Rissen im Gefüge und zu Lotbrüchigkeit, weshalb optional ein Maximalgehalt von bis zu 0,5 vorzugsweise weniger als 0,2 besonders bevorzugt weniger als 0,05 Gewichts-% festgelegt wird.

Kupfer Cu: Cu verringert die Korrosionsrate und steigert die Festigkeit. Gehalte oberhalb 3 Gewichts-% verschlechtern die Herstellbarkeit durch Bildung niedrig schmelzender Phasen beim Vergießen und Warmwalzen weshalb optional ein Maximalgehalt von 3 bevorzugt von weniger als 0,5 insbesondere bevorzugt weniger als 0,1 Gewichts-% festgelegt wird.

Wolfram W: W wirkt als Karbidbildner und erhöht die Festigkeit und Warmfestigkeit. Gehalte an W von über 5 Gewichts-% verschlechtern die Dehnungseigenschaften, weshalb optional ein Gehalt von 0,01 bis 3 Gewichts-% bevorzugt 0,2 bis 1,5 Gewichts-% festgelegt wird.

Kobalt Co: Co erhöht die Festigkeit des Stahls, stabilisiert den Austenit und verbessert die Warmfestigkeit. Gehalte von über 8 Gewichts-% verschlechtern die Dehnungseigenschaften in den erfindungsgemäßen Legierungen, weshalb optional ein Gehalt von 0,01 bis 5, bevorzugt 0,3 bis 2 Gewichts-% festgelegt wird.

Zirkonium Zr: Zr wirkt als Karbidbildner und verbessert die Festigkeit. Gehalte an Zr von über 0,5 Gew-% verschlechtern die Dehnungseigenschaften, weshalb optional ein Gehalt von 0,3 Gewichts-% und ein Minimalgehalt von 0,005 Gewichts-% festgelegt wird. Besonders bevorzugt wird ein Gehalt von 0,01 bis 0,2 Gewichts-%.

Tantal Ta: Ta wirkt ähnlich wie Niob als Karbidbildner kornfeinend und verbessert dadurch gleichzeitig die Festigkeit, Zähigkeit und Dehnungseigenschaften. Gehalte von über 0,5 Gewichts-% bewirken keine weitere Verbesserung der Eigenschaften. Daher wird optional ein Maximalgehalt von 0,5 Gewichts-% festgelegt. Bevorzugt werden ein Minimalgehalt von 0,005 und ein Maximagehalt von 0,3 Gewichts-% festgelegt, in welchem die Kornfeinung vorteilhaft bewirkt werden kann. Zur Verbesserung der Wirtschaftlichkeit und Optimierung der Kornfeinung wird insbesondere bevorzugt ein Gehalt von 0,01 Gewichts-% bis 0,1 Gewichts-% angestrebt.

Tellur Te: Te verbessert die Korrosionsbeständigkeit und die mechanischen Eigenschaften sowie die spanende Bearbeitbarkeit. Des Weiteren erhöht Te die Festigkeit von MnS, welches dadurch beim Warm- und Kaltwalzen weniger stark in Walzrichtung gelängt wird. Gehalte oberhalb 0,5 Gewichts-% verschlechtern die Dehnungs- und Zähigkeitseigenschaften, weshalb ein Maximalgehalt von 0,5 Gewichts-% festgelegt wird. Optional wird ein Minimalgehalt von 0,005 Gewichts-% und ein Maximalgehalt von 0,3 Gewichts-% festgelegt, welche die mechanischen Eigenschaften vorteilhaft verbessern und die Festigkeit vorhandener MnS erhöhen. Weiterhin wird ein Minimalgehalt von 0,01 Gewichts-% und ein Maximalgehalt von 0,1 Gewichts-% bevorzugt, welche eine Optimierung der mechanischen Eigenschaften bei gleichzeitiger Reduktion der Legierungskosten ermöglichen.

Bor B: B verbessert die Festigkeit und stabilisiert den Austenit. Gehalte von mehr als 0,15 Gewichts-% führen zu einer Versprödung des Werkstoffs. Daher wird bei dem erfindungsgemäßen Stahl B optional im Bereich von 0,001 Gewichts-% bis 0,08 Gewichts-% zulegiert. Besonders bevorzugt wird ein Gehalt auf 0,002 bis 0,01 Gewichts-% festgelegt.

Das vorbeschriebene erfindungsgemäße Stahlflachprodukt eignet sich besonders zur Herstellung flexibel gewalzter Stahlflachprodukte, welche aufgrund des angepassten Blechdickenprofils eine Gewichtsreduktion und somit geringere Produktionskosten und eine Steigerung der Effizienz ermöglichen. Flexibel gewalzte Stahlflachprodukte kommen dabei beispielsweise in der Automobilindustrie (Fahrzeugkarosserien), Agrartechnik, im Schienenfahrzeugbau, in der Verkehrstechnik oder Hausgerätetechnik zum Einsatz. Das erfindungsgemäße Stahlflachprodukt eignet sich des Weiteren besonders für den Einsatz in tailored welded blanks (geschweißte Platinen).

Zur Untersuchung der mechanischen Eigenschaften von erfindungsgemäß hergestellten Stahlbändern aus einer beispielhaften Legierung 1 wurden Versuche durchgeführt. Die Legierung 1 enthält neben Eisen und erschmelzungsbedingten Verunreinigungen auszugsweise die folgenden Elemente in den aufgeführten Gehalten in Gewichts-%:

| Legierung | C | Mn | Al | Si |
|---|---|---|---|---|
| Leg. 1 | 0,2 | 7,0 | 0,9 | 0,5 |

Die aus der vorgenannten Legierung 1 hergestellten Stahlbänder wurden zum Vergleich kaltgewalzt, d. h. bei Raumtemperatur und somit unter 50°C, und auch erfindungsgemäß bei 250°C gewalzt. Die angegebenen Eigenschaften stehen in Abhängigkeit zum Umformgrad e. Der Umformgrad e ist definiert als Quotient der Dickenänderung Δd des untersuchten Stahlbandes durch die Anfangsdicke d0 des untersuchten Stahlbandes. Wie beim flexiblen Walzen üblich, wurden mehrere Querschnitte verwendet. Die unterschiedlichen Umformgrade stehen für verschiedene Dicken beim flexiblen Walzen. Die Kennwerte können sowohl mittels Warmband (Kennwerte am Warmband ermittelt), als auch am geglühten Kaltband erreicht werden. Alle Kennwerte sind für die Legierung 1 angegeben:

| Walztemperatur | Rp0,2 [MPa] | Rm [MPa] | A50 [%] | Umformgrad (e=Δd/d0) [%] |
|---|---|---|---|---|
| RT (ca. 25 °C) | 601 | 904 | 29,5 | 0 |
| RT (ca. 25 °C) | 1222 | 1317 | 2,5 | 44 |
| 250 °C | 819 | 1070 | 27,9 | 17 |
| 250 °C | 1017 | 1141 | 22,2 | 32 |
| 250 °C | 1047 | 1296 | 20,3 | 44 |
| 250 °C | 1119 | 1418 | 17,6 | 54 |

## Patentansprüche

1. Verfahren zur Herstellung eines flexibel gewalzten Stahlflachprodukts mit einer abschnittsweise geforderten Enddicke aus einem hochfesten manganhaltigen Stahl mit einer Zugfestigkeit Rm von mehr als 1000 MPa bis 2000 MPa und einer Bruchdehnung A50 von mehr als 3 % bis 45 % in den am stärksten umgeformten Bereichen des Stahlflachproduktes aufweist, umfassend die Schritte:
- Erschmelzen einer Stahlschmelze mit einer Legierungszusammensetzung enthaltend (in Gewichts-%): C: 0,05 bis 0,35; Mn: > 5 bis < 10; AI: 0,05 bis 5; P: < 0,1; S: < 0,1; N: < 0,1; Rest Eisen einschließlich unvermeidbarer stahlbegleitender Elemente, mit optionaler Zulegierung von einem oder mehreren der folgenden Elemente (in Gewichts-%): Si: bis 6; Cr: bis 6; Nb: bis 1; V: bis 1,5; Ti: bis 1,5; Mo: bis 3; Sn: bis 0,5; Cu: bis 3; W: bis 5; Co: bis 8; Zr: bis 0,5; Ta: bis 0,5; Te: bis 0,5: B: bis 0,15, über die Prozessroute Hochofen-Stahlwerk oder Elektrolichtbogenofen-Stahlwerk mit optionaler Vakuumbehandlung der Schmelze,
- Vergießen der Stahlschmelze zu einem Vorband mittels eines endabmessungsnahen horizontalen oder vertikalen Bandgießverfahrens oder Vergießen der Stahlschmelze zu einer Bramme oder Dünnbramme mittels eines horizontalen oder vertikalen Brammen- oder Dünnbrammengießverfahrens,
- Erwärmen des Vorbandes oder der Bramme oder Dünnbramme auf eine Temperatur von 1050 bis 1250°C oder Inlinewalzen aus der Gießhitze (erste Hitze) heraus,
- Warmwalzen auf eine gleichmäßige Enddicke von 20 bis 0,8 mm bei einer Walzendtemperatur von 1050 bis 800°C,
- Aufhaspeln des Warmbandes bei einer Haspeltemperatur von mehr als 100 bis 800°C,
- Beizen des Warmbandes
- Glühen des Warmbandes bei einer Temperatur von 500 bis 840°C für eine Zeit von 1 min bis 24 h in einer Durchlauf- oder Haubenglühe,
- optionales Kaltwalzen des Warmbandes auf eine gleichmäßige Enddicke bei Raumtemperatur oder erhöhter Temperatur in einem oder mehreren Walzstichen,
- optionales Glühen des kaltgewalzten Warmbandes bei einer Temperatur von 500 bis 840 °C für 1 min bis 24 h in einer Durchlauf- oder Haubenglühe
- Flexibles Walzen des Warm- oder Kaltbandes in einem Walzschritt oder mehreren Walzschritten auf die abschnittsweise geforderten Enddicken mit einer Temperatur des Warm- oder Kaltbandes von 60 °C bis unterhalb Ac3, vorzugsweise von 60 °C bis 450 °C, vor dem ersten Walzschritt,
- optionales elektrolytisches Verzinken oder Feuerverzinken des Warm- oder Kaltbandes oder Aufbringen einer anderweitigen metallischen, organischen oder anorganischen Beschichtung vor oder nach dem flexiblen Walzen.

2. Verfahren nach Anspruch 1, wobei das Warm- oder Kaltband vor dem ersten Walzschritt auf eine Temperatur von 60 °C bis unterhalb Ac3, vorzugsweise von 60 °C bis 450 °C, vorgewärmt wird.

3. Verfahren nach Anspruch 1 oder 2, wobei das Warm- oder Kaltband mit Ausnahme des ersten Walzschrittes in den folgenden Walzschritten bei gleichen oder unterschiedlichen Temperaturen des Warm- oder Kaltbandes von Raumtemperatur bis unterhalb Ac3, vorteilhaft bei Raumtemperatur, die im Bereich zwischen 15 bis 25 °C liegt, bis unterhalb 450 °C, flexibel gewalzt wird.

4. Verfahren nach Anspruch 1 oder 2, wobei das Warm- oder Kaltband in dem ersten Walzschritt und den folgenden Walzschritten bei gleichen Temperaturen des Warm- oder Kaltbandes von 60 °C bis unterhalb Ac3, vorteilhaft bei 60 °C bis unterhalb 450 °C, flexibel gewalzt wird.

5. Verfahren nach einem der Ansprüche 1 bis 4, wobei bei mehreren erforderlichen Walzschritten nach dem ersten Walzschritt mit Vorwärmung, optional der letzte Walzschritt oder mehrere letzte Walzschritte bei Temperaturen, von -100 bis 60 °C erfolgen.

6. Verfahren nach Anspruch 5, wobei Temperatureinwirkung auf das Stahlflachprodukt lokal begrenzt erfolgt.

7. Verfahren nach mindestens einem der Ansprüche 1 bis 6, wobei das Stahlflachprodukt mit folgender Legierungszusammensetzung in Gewichts-% hergestellt wird:
Al: > 0,5 bis 3

8. Verfahren nach mindestens einem der Ansprüche 1 bis 7, wobei das Stahlflachprodukt mit folgender Legierungszusammensetzung in Gewichts-% hergestellt wird:
Si: 0,05 -3, bevorzugt 0,1 - 1,5
Cr: 0,1 - 4, bevorzugt > 0,5 - 2,5
Nb: 0,005 - 0,4, bevorzugt 0,01 - 0,1
V: 0,005 - 0,6, bevorzugt 0,01 - 0,3
Ti: 0,005 - 0,6, bevorzugt 0,01 - 0,3
Mo: 0,005 - 1,5, bevorzugt 0,01 - 0,6
Sn: < 0,2, bevorzugt < 0,05
Cu: < 0,5, bevorzugt < 0,1
W: 0 - 5, 0,01 - 3, bevorzugt 0,2 - 1,5
Co: 0,01 - 5, bevorzugt 0,3 - 2
Zr: 0,005 - 0,3, bevorzugt 0,01 - 0,2
Ta: 0,005 - 0,3, bevorzugt 0,01 - 0,1
Te: 0,005 - 0,3, bevorzugt 0,01 - 0,1
B: 0,001 - 0,08, bevorzugt 0,002 - 0,01

9. Verfahren nach Anspruch 1, wobei das Kaltwalzen bei einer Temperatur vor dem ersten Walzschritt von 60 °C bis unterhalb der Ac3-Temperatur, bevorzugt von 60 bis 450 °C, erfolgt und eine Erwärmung oder Kühlung zwischen den Walzstichen auf 60 °C bis unterhalb der Ac3-Temperatur, bevorzugt auf 60 bis 450 °C, erfolgt.

10. Flexibel gewalztes Stahlflachprodukt hergestellt nach dem Verfahren nach mindestens einem der Ansprüche 1 bis 9, wobei die Zugfestigkeit Rm des Stahlflachprodukts mehr als 1000 MPa bis 2000 MPa und die Bruchdehnung A50 mehr als 3 % bis 45 % in dem am stärksten umgeformten Bereichen beträgt.

11. Flexibel gewalztes Stahlflachprodukt nach Anspruch 10, wobei das Stahlflachprodukt schmelztauch- oder elektrolytisch verzinkt ist oder metallisch, anorganisch oder organisch überzogen ist.

12. Verwendung eines Stahlflachprodukts nach den Ansprüchen 10 und 11 zur Verwendung in der Automobilindustrie, Agrartechnik, im Schienenfahrzeugbau, in der Verkehrstechnik, Hausgerätetechnik oder als geschweißte Platinen (tailored welded blanks).

## Claims

1. A method for producing a flexibly rolled flat steel product having a final thickness required in sections from a high-strength steel containing manganese with a tensile strength Rm of more than 1000 MPa to 2000 MPa and an elongation at break A50 of more than 3% to 45% in the most deformed areas of the flat steel product, comprising the steps of:
- melting of a steel melt with an alloy composition containing (in wt.%): C: 0.05 to 0.35; Mn: > 5 to < 10; Al: 0.05 to 5; P: < 0.1; S: < 0.1; N: < 0.1; balance iron including unavoidable steel accompanying elements, with optional alloying of one or more of the following elements (in wt.%): Si: up to 6; Cr: up to 6; Nb: up to 1; V: up to 1.5; Ti: up to 1.5; Mo: up to 3; Sn: up to 0.5; Cu: up to 3; W: up to 5; Co: up to 8; Zr: up to 0.5; Ta: up to 0.5; Te: up to 0.5: B: up to 0.15, via the blast furnace steelworks or electric arc furnace steelworks process route with optional vacuum treatment of the melt,
- casting the molten steel to form a pre-strip by means of a near-net-shape horizontal or vertical strip casting method or casting the steel melt to form a slab or thin slab by means of a horizontal or vertical slab or thin slab casting process,
- heating the pre-strip or the slab or thin slab to a temperature of 1050 to 1250°C or inline rolling from the casting heat (first heat),
- hot rolling to a uniform final thickness of 20 to 0.8 mm at a final rolling temperature of 1050 to 800°C,
- coiling the hot strip at a coiling temperature of more than 100 to 800°C,
- pickling the hot strip
- annealing of the hot strip at a temperature of 500 to 840°C for a time of 1 min to 24 h in a continuous or bell annealer,
- optional cold rolling of the hot strip to a uniform final thickness at room temperature or at an elevated temperature in one or more rolling passes,
- optional annealing of the cold-rolled hot strip at a temperature of 500 to 840°C for 1 min to 24 h in a continuous or bell annealer
- flexible rolling of the hot or cold strip in one or more rolling steps to the final thicknesses required in sections with a temperature of the hot or cold strip of 60°C to below Ac3, preferably of 60°C to 450°C, before the first rolling step,
- optional electrolytic galvanizing or hot-dip galvanizing of the hot or cold rolled strip or application of another metallic, organic or inorganic coating before or after flexible rolling.

2. The method according to claim 1, wherein the hot or cold strip is preheated to a temperature of 60°C to below Ac3, preferably of 60°C to 450°C, before the first rolling step.

3. The method according to claim 1 or 2, wherein the hot or cold strip, with the exception of the first rolling step, is flexibly rolled in the following rolling steps at the same or different temperatures of the hot or cold strip from room temperature to below Ac3, advantageously at room temperature, which is in the area between 15 and 25°C, to below 450°C.

4. The method according to claim 1 or 2, wherein the hot or cold strip is flexibly rolled in the first rolling step and the following rolling steps at the same temperatures of the hot or cold strip of 60°C to below Ac3, advantageously at 60°C to below 450°C.

5. The method according to any one of claims 1 to 4, wherein a plurality of required rolling steps after the first rolling step with preheating, optionally the last rolling step or a plurality of last rolling steps are done at temperatures of -100 to 60°C.

6. The method according to claim 5, wherein the temperature effect on the flat steel product is locally limited.

7. The method according to at least any of claims 1 to 6, wherein the flat steel product is produced with the following alloy composition in % by weight:
Al: > 0.5 to 3

8. The method according to at least any of claims 1 to 7, wherein the flat steel product is produced with the following alloy composition in % by weight:
Si: 0.05 - 3, preferably 0.1 - 1.5
Cr: 0.1 - 4, preferably > 0.5 - 2.5
Nb: 0.005 - 0.4, preferably 0.01 - 0.1
V: 0.005 - 0.6, preferably 0.01 - 0.3
Ti: 0.005 - 0.6, preferably 0.01 - 0.3
Mo: 0.005 - 1.5, preferably 0.01 - 0.6
Sn: < 0.2, preferably < 0.05
Cu: < 0.5, preferably < 0.1
W: 0 - 5, 0.01 - 3, preferably 0.2 - 1.5
Co: 0.01 - 5, preferably 0.3 - 2
Zr: 0.005 - 0.3, preferably 0.01 - 0.2
Ta: 0.005 - 0.3, preferably 0.01 - 0.1
Te: 0.005 - 0.3, preferably 0.01 - 0.1
B: 0.001 - 0.08, preferably 0.002 - 0.01

9. The method according to claim 1, wherein the cold rolling is done at a temperature before the first rolling step of 60°C to below the Ac3 temperature, preferably of 60 to 450°C, and heating or cooling between the rolling passes to 60°C to below the Ac3 temperature, preferably to 60 to 450°C, takes place.

10. A flexible rolled flat steel product produced by the method according to at least any of claims 1 to 9, wherein the tensile strength Rm of the flat steel product is more than 1000 MPa to 2000 MPa and the elongation at break A50 is more than 3% to 45% in the most deformed areas.

11. The flexible rolled flat steel product according to claim 10, wherein the flat steel product is hot-dip or electrolytically galvanized or metallically, inorganically or organically coated.

12. Use of a flat steel product according to claims 10 and 11 for use in the automotive industry, agricultural engineering, rail vehicle construction, transportation technology, household appliance technology or as welded blanks (tailored welded blanks).

## Revendications

1. Procédé de fabrication d'un produit plat en acier laminé de manière flexible d'une épaisseur finale requise par portions à partir d'un acier à haute résistance contenant du manganèse ayant une résistance à la traction Rm de plus de 1000 MPa à 2000 MPa et un allongement à la rupture A50 de plus de 3 % à 45 % dans les zones les plus fortement déformées du produit plat en acier, ledit procédé comprenant les étapes suivantes:
- obtenir un acier fondu ayant une composition d'alliage qui contient (en % en poids): C: 0,05 à 0,35 ; Mn: > 5 à < 10 ; Al: 0,05 à 5 ; P: < 0,1 ; S: < 0,1 ; N: < 0,1 ; le reste étant du fer, y compris des éléments inévitables accompagnant l'acier, avec addition facultative d'un ou plusieurs des éléments suivants (en % en poids) : Si : jusqu'à 6 ; Cr: jusqu'à 6 ; Nb: jusqu'à 1 ; V: jusqu'à 1,5 ; Ti: jusqu'à 1,5 ; Mo: jusqu'à 3 ; Sn: jusqu'à 0,5 ; Cu: jusqu'à 3 ; W: jusqu'à 5 ; Co: jusqu'à 8 ; Zr: jusqu'à 0,5 ; Ta: jusqu'à 0,5 ; Te: jusqu'à 0,5 : B: jusqu'à 0,15, sur le parcours de processus d'aciérie à haut fourneau ou d'aciérie à four à arc électrique avec traitement sous vide optionnel de la masse fondue,
- couler l'acier fondu pour obtenir une pré-bande à l'aide d'un procédé de coulée de bande horizontale ou verticale proche de la dimension finale ou couler l'acier fondu pour obtenir une brame ou une brame mince à l'aide d'un procédé de coulée de brame ou de brame mince horizontale ou verticale,
- chauffer la pré-bande ou la brame ou brame mince à une température de 1050 à 1250°C ou laminer en ligne à partir de la chaleur de coulée (première chaleur),
- laminer à chaud jusqu'à une épaisseur finale uniforme de 20 à 0,8 mm à une température finale de laminage de 1050 à 800°C,
- bobiner la bande chaude à une température de bobinage de plus de 100 à 800 °C,
- décaper la bande chaude
- recuire la bande chaude à une température de 500 à 840 °C pendant une durée de 1 minute à 24 heures dans un procédé de recuit en continu ou sous hotte,
- éventuellement laminer à froid la bande chaude jusqu'à une épaisseur finale uniforme à température ambiante ou à température élevée en une ou plusieurs passes de laminage,
- éventuellement recuire la bande chaude laminée à froid à une température de 500 à 840 °C pendant 1 min à 24 h dans un procédé de recuit en continu ou sous hotte
- effectuer un laminage flexible de la bande chaude ou froide en une étape de laminage ou en plusieurs étapes de laminage jusqu'aux épaisseurs finales requises par portions à la température de la bande chaude ou froide allant de 60 °C à une température au-dessous de Ac3, de préférence de 60 °C à 450 °C, avant la première étape de laminage,
- effectuer éventuellement une galvanisation électrolytique ou une galvanisation à chaud de la bande à chaud ou à froid ou appliquer un autre revêtement métallique, organique ou inorganique avant ou après le laminage flexible.

2. Procédé selon la revendication 1, la bande chaude ou froide étant préchauffée avant la première étape de laminage à une température de 60 °C jusqu'à une température au-dessous de Ac3, de préférence de 60°C à 450°C.

3. Procédé selon la revendication 1 ou 2, la bande chaude ou froide étant soumise à un laminage flexible, à l'exception de la première étape de laminage, dans les étapes de laminage suivantes à des températures identiques ou différentes de la bande chaude ou froide depuis la température ambiante jusqu'à une température au-dessous de Ac3, avantageusement à température ambiante, qui est dans la gamme entre 15 et 25 °C, jusqu'à moins de 450 °C.

4. Procédé selon la revendication 1 ou 2, la bande chaude ou froide étant soumise à un laminage flexible lors de la première étape de laminage et des étapes de laminage suivantes aux mêmes températures de la bande chaude ou froide de 60 °C jusqu'à une température au-dessous de Ac3, avantageusement de 60 °C à moins de 450 °C.

5. Procédé selon l'une des revendications 1 à 4, si plusieurs étapes de laminage sont nécessaires après la première étape de laminage avec préchauffage, la dernière étape de laminage ou plusieurs dernières étapes de laminage étant éventuellement effectuées à des températures de -100 à 60 °C.

6. Procédé selon la revendication 5, l'effet de la température sur le produit plat en acier étant limité localement.

7. Procédé selon l'une au moins des revendications 1 à 6, le produit plat en acier étant fabriqué avec la composition d'alliage suivante en % en poids :
Al : >0,5 à 3

8. Procédé selon l'une au moins des revendications 1 à 7, le produit plat en acier étant fabriqué avec la composition d'alliage suivante en % en poids :
Si: 0,05 à 3, de préférence 0,1 à 1,5
Cr: 0,1 à 4, de préférence > 0,5 à 2,5
Nb: 0,005 à 0,4, de préférence 0,01 à 0,1
V: 0,005 à 0,6, de préférence 0,01 à 0,3
Ti: 0,005 à 0,6, de préférence 0,01 à 0,3
Mo: 0,005 à 1,5, de préférence 0,01 à 0,6
Sn: < 0,2, de préférence < 0,05
Cu: < 0,5, de préférence < 0,1
W: 0 à 5, 0,01 à 3, de préférence 0,2 à 1,5
Co: 0,01 à 5, de préférence 0,3 à 2
Zr: 0,005 à 0,3, de préférence 0,01 à 0,2
Ta: 0,005 à 0,3, de préférence 0,01 à 0,1
Te: 0,005 à 0,3, de préférence 0,01 à 0,1
B: 0,001 à 0,08, de préférence 0,002 à 0,01

9. Procédé selon la revendication 1, le laminage à froid étant effectué à une température, avant la première étape de laminage, de 60 °C à une température au-dessous de Ac3, de préférence de 60 à 450 °C, et le chauffage ou le refroidissement entre les passes de laminage étant effectué à 60 °C jusqu'à une température au-dessous de Ac3, de préférence entre 60 et 450 °C.

10. Produit plat laminé flexible en acier fabriqué par le procédé selon l'une au moins des revendications 1 à 9, la résistance à la traction Rm du produit plat en acier étant de plus de 1000 MPa à 2000 MPa et l'allongement à la rupture A50 étant de plus de 3 % à 45 % dans les zones les plus fortement déformées.

11. Produit plat laminé flexible selon la revendication 10, le produit plat en acier étant galvanisé à chaud ou par voie électrolytique ou comportant un revêtement métallique, inorganique ou organique.

12. Utilisation d'un produit plat en acier selon les revendications 10 et 11 dans l'industrie automobile, la construction agricole, la construction de véhicules ferroviaires, la construction de routes, la technique des appareils électroménagers ou comme flans soudés (tailored welded blanks).
